# EUROPEAN PATENT APPLICATION

(11) **EP 1 808 337 A1**
(43) Date of publication of application: **18.07.2007**
(21) Application number: 06000686.3
(22) Date of filing: 13.01.2006
(51) Int. Cl.: B60R 13/08, B60R 21/34

(54) **Engine compartment shielding**

(71) Applicant: Rieter Technologies AG, 8406 Winterthur (CH)
(72) Inventor: Lehmann, Dirk, CH-8525 Niederneunforn (CH); Godano, Philippe Pierre, CH-8400 Winterthur (CH); De Ciutis, Hermann, CH-8406 Winterthur (CH); Köse, Selamet, CH-8406 Winterthur (CH); Viktorovich, Michel, CH-8406 Winterthur (CH)
(74) Representative: Alder, Hans Rudi

(57) **Abstract**

A lightweight engine compartment shielding (1) is suitable for increasing the passenger's acoustic and climatic comfort. This compartment shielding is mounted on to the car body of the engine compartment and completely covers the engine compartment in one part or in several partitions. The compartment shielding (1) is build up as a self-supporting double-walled assembly comprising an upper-shell (2), an under-shell (3) and an airspace (5) in between

## Description

Present invention is concerned with a light weight engine compartment shielding in accordance with the preamble of claim 1.

Well known developments in the automotive industry aim to reduce the noise generated and emitted by the engine and components related thereto. In particular it is known in the art to provide noise or sound generating components of vehicles with a sound damping cover. A typical embodiment of such a sound damping cover is described in DE-10'2005'014'535. This document discloses in particular a mounting attachment for a motor covering part, which mounting attachment is provided with decoupling elements, which should avoid any vibration excitation of the covering part itself. The motor covering part is additionally designed to esthetical shield the free view to the motor. A more detailed description of a similar motor covering part combining esthetical aspects and sound absorptive properties is disclosed in DE-10'2004'007'602.

Recent embodiments of such motor covering parts combine other technical functions with the sound absorptive properties of these parts. Such a motor covering part is described in DE-103'14'220. The motor covering part disclosed in this document comprises a carrier element carrying on its inner side a sound absorbing layer and on its outer side a pedestrian impact protective cushion. Covers combining sound absorptive layers and impact protective cushions are known in the art, for instance from FR-2'851'973 or DE-101'21'683 and successfully integrated in today's cars.

All these motor covering parts comprise a supporting element which is mounted on the motor itself and are carrying additional functional elements. It is evident that such motor covering assemblies are increasing the over all weight of the car and therewith are increasing the over all energy consumption of the car.

DE-198'25'739 proposes an acoustical cover which is mounted onto a housing encapsulating the motor in order to shield the sound emitted by the engine and some of its components. In addition this cover is carrying a peripheral component of the engine, in particular a metallic component of a venting means for a turbocharger, comprising a plurality of ribs and is welded to the metallic cover. This assembly is at the same time shielding the direct view to the engine, but is not particularly suitable to be esthetical stylable and bears the risk of a heat overload (overheating) during driving conditions. Such a heat overload is leading to overheat damages of the engine and its components. Although this construction allows to completely cover the engine, this metallic construction is not suitable to store heat during non-driving conditions. This construction allows the reduction of noise emitted by the engine but is becoming heavy and clumsy, in particular when additional means for different technical functions are added.

Therefore it is the main object of present invention to achieve an esthetical stylisable, multifunctional and lightweight assembly, which not only reduces noise emitted by the motor and by the components of the engine compartment but which allows a lightweight integration of further technical functions, such as thermal management means, sound absorbing means and pedestrian impact protective means. It is the goal of the invention to achieve a light weight and trendy stylable compartment shielding for increasing the passengers acoustic and climatic comfort (noise, temperature), for optimising starting and restarting conditions of the engine and its components and therefore for reducing the over all energy consumption, over all emission and over all wear of the car's components, and for increasing the aesthetic appearance of the engine compartment and the ease of routine maintaining operations.

This object is achieved by a light weight engine compartment shielding comprising the features of claim 1. In particular this shielding covers the engine compartment in one part or in several partitions, so as to store heat. The ability to store heat within the engine compartment leads to a quicker heat-up of the engine, and therefore a less over all wear of the engine and its components, and least but not last allows an accelerated warm-up of the passengers compartment. In order to store heat the engine compartment according to the invention is build-up as a self-supporting double-walled assembly comprising an upper-shell, an under-shell and an airspace in between. In addition this compartment shielding is chassis mounted, i.e. is mounted onto the car body of the engine compartment, so as to reduce chimney-effects, i.e. to reduce the amount of hot air escaping in vertical direction along the compartment boundary. It is important for the understanding of present invention, that this chimney-effect-free shielding and double-walled construction reduces the velocity of the temperature drop within the engine compartment after an operating phase. This allows to restart the car under still warmed-up conditions after a stop of several hours. In particular the heat storing capability of present shielding leads to a reduction of cold-start and restart emissions due to an improved start temperature increase and due to an elevated restart temperature of the engine, the various aggregates and its fluids (oils, etc.). The said improved temperature behaviour further leads to a reduction of fuel consumption and a reduced wear of all engine parts such as the gear box, the cylinder heads, catalysts, etc.

It is an important aspect of present invention that the double-walled assembly essentially consists of light-weight materials which preferably is a non-metallic material in order to reduce the heat transmission loss. Of course hybrid materials combining non-metallic and metallic materials may be used. Suitable light-weight materials are any plastics materials, preferably EPO (expanded polyolefin), PP, GMT or SMC, in particular any thermoset or thermoplastics materials. In a preferred embodiment the under-shell essentially consists of a fibrous and/or foamed material exhibiting a given airflow resistance. Suitable non-woven materials are known in the technical field as KEST products.

A further important aspect of the invention is the reduction of chimney effects, i.e. the reduction of hot air escaping from the engine compartment. Therefore present engine compartment shielding comprises a sealing means to reduce chimney effects. In particular this sealing means comprise faying surfaces and/or elastic sealing bands along the edge or border line between the shielding and the car body of the engine compartment. It appears that these sealing bands additionally are decoupling the compartment shielding from the car body's vibrations what is advantageous for acoustic reasons.

In order to improve the heat storing capability of the compartment shielding this shielding further comprises a heat insulation means, and in particular an airspace between upper-shell and under-shell of the self-supporting double-walled assembly. Nevertheless this space may be at least partially filled with other materials such as foam and/or fibres materials, in particular a carbon nonwoven. In a preferred embodiment the compartment shielding is comprising a metallic structure, i.e. a metallic foil such as an aluminium foil with a heat reflective surface. This foil is preferably affixed to the inner surface of the upper-shell in order to be protected against dust and/or dirt and/or mechanical damages leading to a degradation of its heat reflective performance.

Furthermore the engine compartment shielding in accordance with the invention comprises an air flow guiding means for cooling the engine compartment during driving conditions. This cooling is important in order to avoid overheating and is achieved by means forcing the air to flow through the compartment. Typically these means are comprising at least an air duct which during driving conditions selectively discharges the air trapped inside the engine compartment. It is understood that this air flow guiding means are comprising any kind of passive and/or active measurements, such as simple guiding plates being movable (shutters) or affixed (deflectors), as well as sophisticated ventilator systems (fans). These means help to cool the aggregates during critical conditions and are mainly directed to the region between engine and dash where most of the hot air is trapped.

It is another important aspect of present invention to achieve improved acoustic properties. This is accomplished mainly by the over all covering of the engine compartment and by using a double-walled assembly. In addition the shielding in accordance with the invention further comprises specific sound absorbing means. In particular the under-shell of this shielding consists at least partially of an open-pored fibres- and/or foam-material which features a given air flow resistance in the range of 100 to 10'000 Nsm⁻³. Preferable this open-pored fibres- and/or foam-material is a multi-layer material. Furthermore present shielding allows to additionally locate specific sound absorbing materials inside of the double-walled assembly. These additional sound absorbing materials as well the air flow resistance properties of the under-shell may be uniformly or discontinuously distributed over the entire area.

An additional important aspect of present invention is the integration of one or more pedestrian protective crash pad means. This means comprises at least partially a passive protective structure which is integrated in the upper-shell, in particular a thermoset or thermoplastic foam material In another embodiment these passive protective structures, in particular a honey-comb-like structure is affixed in between the upper- and under-shell of the self-supporting double-walled assembly. The crash energy absorption is also provided by bending forces and/or shear forces acting to the upper-shell. The double-walled assembly allows to locally arrange and/or integrate impact energy absorptive materials at critical areas, i.e. areas being close to the engine or other dangerous aggregates. In particular these pedestrian protective crash pad means allow to save compartment space and to arrange the compartment shielding as close as possible (up to 2 cm) to the motor bonnet and to design a slim front part of the vehicle. As a matter of course this pedestrian protective crash pad means may comprise at least partially an active protective device, in particular an air bag device.

Yet another important aspect of the present invention is the simple stylability and manifold design potential which is facilitated on both sides of the double-walled assembly. In particular the plastics material of the upper-shell allows the compartment shielding to be trendy styled. A preferred embodiment of the shielding comprises areas and/or markings in different colours to increase the - aesthetic appearance and to increase the ease of routine maintaining operations.

It is understood that not only different colours, pattern and/or images may be used but also different surface texture properties may be applied. Furthermore the engine compartment shielding comprises closable openings for routine maintaining operations such as measuring the oil level and/or the battery charge, refilling oil and/or wind screen cleaning water, testing electronic devices, etc.

In an additional embodiment of the invention the compartment shielding comprises a partition which is affixed to the engine bonnet. This separate partition is lift off when the motor bonnet is opened and is fittingly closing the engine compartment shielding when the motor bonnet is closed. Such a partition may comprise a plastics aggregate separation wall, in particular for a water box.

The advantages of above esthetical engine compartment shielding are evident for the man skilled in the art. In particular the present invention allows to manufacturing a stylable and an esthetical satisfying multifunctional and lightweight assembly, which completely eliminates noise generated and emitted by the components located in the engine compartment and which allows a lightweight integration of other technical features, such as thermal management means, pedestrian impact protective means and crash energy absorptive means.

In the following the present invention will become more apparent from the following description of a preferred embodiment in connection with the accompanying drawings which show in:
- Fig. 1:: a perspective view of the top side of the double-walled engine compartment shielding according to the invention;
- Fig. 2:: a perspective view of the top side of the under-shell of the double-walled engine compartment shielding according to the invention;
- Fig. 3:: a diagram for a typical temperature behaviour of the engine compartment temperature during a common driving situation.

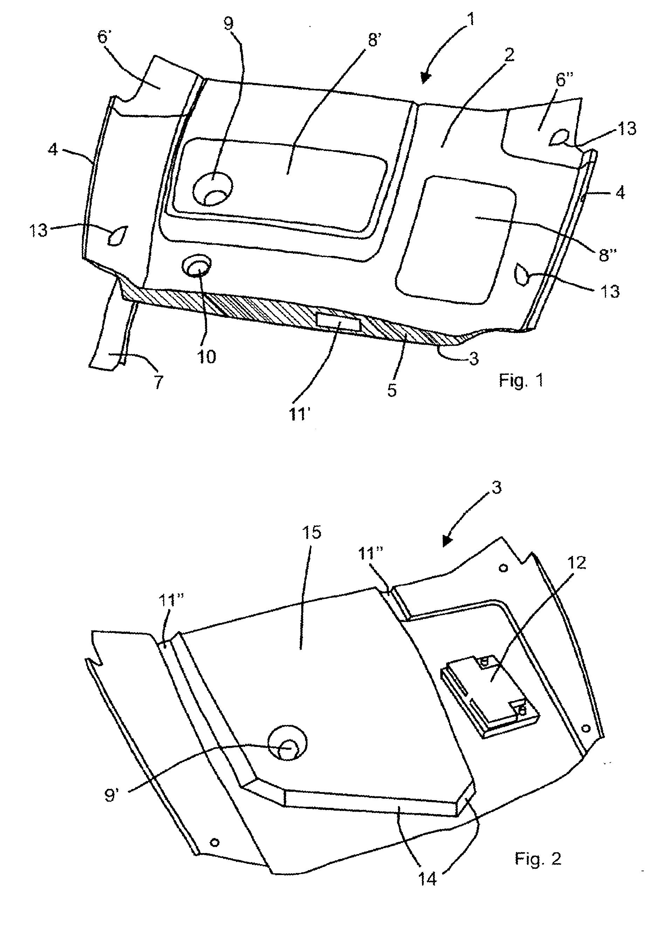

Figure 1 shows a perspective view of the top side of a fictive engine compartment shielding 1 according to the invention. This shielding 1 comprises an upper-shelf 2 and an under-shell 3. Theses two shells 2, 3 are spaced apart to form an airspace 5 and fixed to each other by gluing or melting along their border lines 4. In order to completely cover the engine compartment the shielding 1 is mounted to the car body 7 of the engine compartment and may comprise several shielding partitions 6', 6". In a preferred embodiment the shielding 1 is tightly attached to the engine compartment by fastener means 13. Sealing means (not shown) may be provided between the car body 7 and the shielding 1, which sealing means is designed such that the vibrations of the car body 7 are decoupled from the shielding 1. The shielding 1 according to the invention comprises recesses 9,10 which allow maintenance services, for instance refilling motor oil and/or for contacting the battery 12. It is self-evident that these recesses 9, 10 are closable by service part closures 8', 8". A cooling vent 11' is provided at the front side in order to guide cooling air to a region where trapped hot air has to be removed.

Figure 2 shows a perspective view of the fictive top side of an under-shell 3 of the double-walled shielding 1. This under-shell comprises recesses 9' to allow the access to components located in the engine compartment such as a motor oil refill neck or a battery 12. This under-shell 3 is preferably designed such that the hot air of the engine compartment is trapped in specific regions and mainly follows the contour 15 of the arrangement of motor block and its aggregates. In addition, this under-shell comprises airflow guiding means 14, 11" which separate and guide the incoming cooling air to different regions.

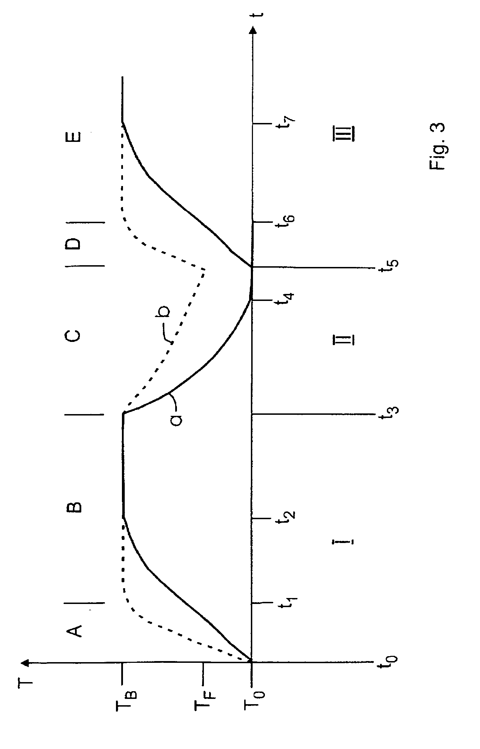

The diagram of Figure 3 shows a typical behaviour of the temperature within the engine compartment during a common driving situation. As example this common driving situation is represented by the curve a) in Figure 3 and comprises a first driving phase I., a parking phase II. and a second driving phase III. Starting the first driving phase I at a time to the standby temperature To of the engine compartment is increasing. After a time t₂ the operating temperature T_{B} (Betriebstemperatur) is received and the temperature within the engine compartment stays at this level. After having parked the car at the time t₃ the stopped engine starts to cool down until it has received the standby temperature To at the time t₄. Commonly this standby temperature T₀ is received after about half an hour. At the end of the parking phase II at the time t₅ the temperature behaviour of the second driving phase III looks similar to the behaviour during the first driving phase I, i.e. increasing until the operating temperature T₈ is received at the time t₇.
The results of test measurements of a engine compartment comprising a shielding in accordance with this invention are represented by the curve b) in Figure 3. This curve shows that the temperature within the engine compartment starting from To at the time to receives the operating temperature T_{B} at a time t₁ < t₂. On the other hands the temperature drops during the parking phase II from the operating temperature T_{B} at the time t₃ to a restart temperature T_{F} at the time t₅. It becomes evident from this temperature behaviour represented by this curve b) that the duration of the starting phase A is shorter than the starting phase (t₂ - to) represented by curve a). The advantages of reaching the operating temperature in short time are obvious for the man skilled in the art and explained above in more detail. Observing the restarting phase D of the curve b) it becomes clear that the duration (t₆ - t₅) of this restarting phase D is even shorter than the duration of the starting phase (t₂ - t₀).

The advantages of present invention are apparent to the man skilled in the art and have to be seen in the engine compartment border supported double shell concept mainly. This chassis mounted double shell concept further allows to integrate a plurality of advantageous functions. In particular this shielding improves cold start and re-start conditions, for instance of the engine itself, of aggregates and fluids, of the battery, of the catalyst converter etc., what typically leads to a substantive increase of the lifetime of these components. A further advantage is to be seen in increasing the rapidity of interior heating capability (increase of the comfort index PMV) and in the reduction of fuel consumption (3 - 5%). Furthermore the over all shielding allows to eliminate any shadowing effect of the acoustic absorption properties on the engine hood. The sound absorption of low to medium frequencies is substantially increased and direct sound leakage is minimised. Furthermore the structure born excitation of the shielding is reduced, thanks to the non-engine support, i.e. the chassis support of the shielding. This as well increases the lifetime, performance and construction simplicity of the shielding. The local integration of reliable pedestrian protective crash pads leads to cost and weight benefits and a substantial saving of compartment space allowing to design a slim front part of the vehicle. In addition the present invention allows to manufacturing an easily stylable and an esthetical satisfying multifunctional and lightweight assembly which in addition is easy to dismantle at the end of its lifetime and to recycle. This shielding not only allows to reduce the all over weight and costs but also serves the ease and complaisance of the passenger. In particular this shielding improves the safety of the person executing routine maintaining operations insofar that no metallic tools, burning cigarettes, drinks and/or personal objects as glasses or pens may fall into the compartment and cause damages.

## Claims

1. Light weight engine compartment shielding for increasing the passengers acoustic and climatic comfort (noise, temperature), for reducing the over all energy consumption of the car and for increasing the aesthetic appearance of the engine compartment and the ease of routine maintaining operations, whereto the compartment shielding covers the engine compartment in one part or in several partitions, so as to store heat (to reduce velocity of temperature drop), whereto the compartment shielding is build up as a self-supporting double-walled assembly comprising an upper-shell, an under-shell and an airspace in between, and whereto the compartment shielding is chassis mounted, i.e. is mounted onto the car body of the engine compartment, so as to reduce chimney effects, i.e. to reduce escaping of hot air in vertical direction along the compartment boundary.

2. Engine compartment shielding in accordance with claim 1, **characterised in that** the double-walled assembly consists of a light-weight materials, in particular of a non-metallic material.

3. Engine compartment shielding in accordance with claim 1, **characterised in that** the compartment shielding comprises a sealing means to reduce chimney effects.

4. Engine compartment shielding in accordance with claim 3, **characterised in that** the sealing means comprise faying surfaces and/or an elastic sealing band.

5. Engine compartment shielding in accordance with claim 1, **characterised in that** the compartment shielding comprises a heat insulation means.

6. Engine compartment shielding in accordance with claim 5, **characterised in that** the heat insulating means comprises a metallic structure and/or a carbon nonwoven.

7. Engine compartment shielding in accordance with claim 5, **characterised in that** the heat insulating means comprises a heat reflective surface.

8. Engine compartment shielding in accordance with claim 5, **characterised in that** the heat insulating means is located inside of the double-walled assembly in order to avoid a degradation of performance due to dirt accumulation.

9. Engine compartment shielding in accordance with claim 1, **characterised in that** the compartment shielding comprises a cooling means, in particular an air flow guiding means for cooling the engine compartment during driving conditions in order to avoid overheating by forcing the air to flow through the compartment.

10. Engine compartment shielding in accordance with claim 9, **characterised in that** the air flow guiding means comprises at least an air duct which during driving conditions selectively discharges the air trapped inside the engine compartment.

11. Engine compartment shielding in accordance with claim 1, **characterised in that** the compartment shielding comprises a sound absorbing means.

12. Engine compartment shielding in accordance with claim 11, **characterised in that** the under-shell of this shielding consists at least partially of an open-pored fibres- and/or foam-material.

13. Engine compartment shielding in accordance with claim 12, **characterised in that** this open-pored fibres- and/or foam-material is a multi-layer material.

14. Engine compartment shielding in accordance with claim 12, **characterised in that** an additional sound absorbing means is located inside of the double-walled assembly.

15. Engine compartment shielding in accordance with claim 1, **characterised in that** the compartment shielding comprises at least partially one or more pedestrian protective crash pad means.

16. Engine compartment shielding in accordance with claim 15, **characterised in that** this pedestrian protective crash pad means comprises at least partially a passive protective structure, in particular a thermoset foam material or a honey-comb-like structure.

17. Engine compartment shielding in accordance with claim 15, **characterised in that** this pedestrian protective crash pad means comprises at least partially an active protective device, in particular an air bag device.

18. Engine compartment shielding in accordance with claim 1, **characterised in that** the compartment shielding comprises closable openings for routine maintaining operations.

19. Engine compartment shielding in accordance with claim 18, **characterised in that** the compartment shielding is trendy styled, in particular comprises areas and/or markings in different colours to increase the aesthetic appearance of the engine compartment shielding and to increase the ease of routine maintaining operations.

20. Engine compartment shielding in accordance with claim 1, **characterised in that** the compartment shielding comprises a partition being affixed to the engine bonnet for closing the engine compartment.

21. Engine compartment shielding in accordance with claim 20, **characterised in that** the partition being affixed to the engine bonnet comprises a plastics aggregate separation wall, in particular a water box.
